# FASCICULE DE BREVET EUROPEEN

(11) **EP 3 237 762 B1**
(45) Date de publication et mention de la délivrance du brevet: **06.02.2019**
(21) Numéro de dépôt: 15817452.4
(22) Date de dépôt: 24.11.2015
(51) Int. Cl.: F16B 5/01, F16B 11/00

(54) **DISPOSITIF DE FIXATION AMORTISSANT ENTRE DEUX ÉLÉMENTS À ASSEMBLER, PROCÉDÉ DE FABRICATION D'UN TEL DISPOSITIF, ENSEMBLE DE DEUX ÉLÉMENTS ASSEMBLÉS À L'AIDE D'UN TEL DISPOSITIF, ET PROCÉDÉ D'ASSEMBLAGE**
VORRICHTUNG ZUR STOSSDÄMPFENDEN BEFESTIGUNG ZWEIER ZU MONTIERENDER ELEMENTE, VERFAHREN ZUR HERSTELLUNG SOLCH EINER VORRICHTUNG, SATZ AUS ZWEI ANHAND SOLCH EINER VORRICHTUNG MONTIERTEN ELEMENTEN UND MONTAGEVERFAHREN
DEVICE FOR THE SHOCK-ABSORBING ATTACHMENT OF TWO ELEMENTS TO BE ASSEMBLED, METHOD FOR PRODUCING SUCH A DEVICE, SET OF TWO ELEMENTS ASSEMBLED USING SUCH A DEVICE, AND ASSEMBLY METHOD

(30) Priorité: 24.12.2014 FR 1463334
(43) Date de publication de la demande: 01.11.2017
(73) Titulaire: Airbus Defence and Space SAS, 31402 Toulouse Cedex 4 (FR)
(72) Inventeur: CHEYNET DE BEAUPRE, René, Jean, 31320 Castanet Tolosan (FR); CAMARASA, Patrick, 31320 Rebigue (FR)
(74) Mandataire: Cabinet Plasseraud
(86) Numéro de dépôt international: PCT/FR2015/053192
(87) Numéro de publication internationale: WO 2016/102792

(56) Documents cités:
- JP-A- 2000 145 889
- US-A- 4 973 208

## Description

La présente invention concerne un dispositif de fixation amortissant de deux éléments à assembler entre eux, destiné à isoler les éléments entre eux pour limiter la transmission de chocs et/ou de vibrations. La présente invention trouve une application particulière dans le domaine des satellites et engins spatiaux.

De manière connue, un satellite comprend un corps formant une structure porteuse sur laquelle sont fixés divers équipements et instruments. A titre d'exemple, on peut citer les équipements de plateforme (réservoirs d'ergols, batteries, antennes de télémesure / télécommande) ou de charge utile (instruments de mesure, antennes de télécommunication).

Les équipements et instruments sont pour la plupart sensibles aux chocs et aux vibrations. Chocs et vibrations, pour un satellite, peuvent se produire notamment lors du lancement du satellite et lorsque le satellite est en fonctionnement en orbite.

En effet, pour le lancement du satellite, ce dernier est placé dans un lanceur, sur lequel il est fixé de manière amovible. Pendant la phase de décollage, sur la trajectoire, puis lors de la séparation des étages du lanceur, des événements produisent chocs et vibrations. Les chocs et les vibrations du lanceur sont transmis au satellite, puis aux instruments et aux équipements en se propageant dans la structure porteuse. Ces chocs et vibrations, de forte amplitude et de basses fréquences, risquent de dérégler voire d'endommager les instruments et équipements. De plus, lorsque le satellite est en orbite, des chocs et des vibrations, généralement de plus faibles amplitudes mais de plus hautes fréquences, surviennent également, par exemple lors du déploiement des équipements et instruments ou de la mise en route de propulseurs. Ces chocs et vibrations se propagent également dans la structure porteuse du satellite jusqu'aux instruments et équipements.

Il est intéressant et parfois nécessaire de mettre en places des moyens pour amortir les chocs et vibrations et empêcher leur transmission entre deux éléments assembler. Ceci permet de minimiser le surdimensionnement des structures et équipements ou d'améliorer la précision de pointage d'une charge utile.

Les problèmes de chocs et de vibrations peuvent être contournés de plusieurs manières, par exemple :
- En surdimensionnant les éléments à assembler, mais cette solution s'accompagne d'une augmentation de la masse et des coûts.
- En mettant en place des modules d'isolation en interface entre la pièce à isoler et une pièce propageant des vibrations. Par exemple, on trouve de tels modules entre un anneau d'interface satellite du lanceur et un anneau d'interface lanceur du satellite. Le document US 7,249,756 présente un exemple d'un tel module, comprenant des pièces en élastomères pour absorber les chocs et vibrations et des pièces métalliques pour assurer la rigidité du module. Cependant, de tels modules augmentent l'encombrement en venant se loger dans un espace entre les deux anneaux d'interface. Ils sont donc inadaptés pour le montage d'instruments et d'équipements sur le corps du satellite, où l'encombrement est problématique. Ils ajoutent également du poids à l'ensemble. En tant que pièce supplémentaire à manipuler, ils complexifient en outre le montage.
- En utilisant des dispositifs de fixation amortissant, appelés inserts, intégrés à un des éléments à assembler, afin de diminuer l'encombrement. Le document JP 2000-145889 décrit un exemple d'un tel dispositif de fixation pour assembler une charge sur une plaque en nid d'abeille. Le dispositif de fixation comprend une partie inférieure formant logement pour un corps d'insertion, les parois intérieures du logement étant recouvertes des corps en matière viscoélastique. La pièce inférieure est cocuite avec la plaque en nid d'abeille. Puis, le corps d'insertion est placé dans le logement, et une pièce supérieure referme le logement. Le corps d'insertion émerge partiellement hors du logement, de sorte que la charge peut être fixée dessus par boulonnage. Lors des mouvements relatifs entre la charge et la plaque en nid d'abeille, le corps d'insertion vient en butée contre parois intérieures du logement, sur les corps en matière viscoélastique, apportant l'amortissement aux chocs et aux vibrations. Ce type de dispositif d'isolation présente un encombrement réduit, la charge étant en contact avec la plaque en nid d'abeille sans l'interposition d'une pièce. Cependant, la mise en place du dispositif de fixation sur la charge et sur la plaque en nid d'abeille au moyen d'une telle structure se révèle fastidieuse. En outre, la raideur des moyens d'isolation dépend entre autre de la surface des corps en matière viscoélastique, de sorte que la raideur est limitée par les dimensions du logement formé par la pièce inférieure.

Il existe donc un besoin pour un nouveau dispositif de fixation amortissant permettant de surmonter les inconvénients précité.

Ainsi, un premier objet de l'invention est de proposer un dispositif de fixation amortissant aisé à mettre en place, ne requérant pas la qualification d'une nouvelle technique de pose

Un deuxième objet de l'invention est de proposer un dispositif de fixation amortissant n'augmentant pas l'encombrement sur le satellite.

Un troisième objet de l'invention est de proposer un dispositif de fixation amortissant permettant d'avoir des caractéristiques, telle que la raideur, adaptables en fonction des besoins.

Un quatrième objet de l'invention est de proposer un dispositif de fixation amortissant ne requérant pas de modification particulière du matériel existant.

Un cinquième objet de l'invention est de proposer un dispositif de fixation amortissant n'augmentant pas la masse ni les coûts d'intégration.

Selon un premier aspect, l'invention propose un dispositif de fixation amortissant entre deux éléments à assembler. Le dispositif de fixation comprend notamment :
- une pièce interne tubulaire selon un axe de fixation, destinée à être rigidement fixée à un premier élément à assembler, et comprenant une surface latérale extérieure ;
- une pièce externe tubulaire selon l'axe de fixation, creuse, destinée à être rigidement fixée au deuxième élément à assembler et comprenant une surface latérale intérieure, la pièce interne étant logée dans la pièce externe de sorte que la surface extérieure de la pièce interne est en vis-à-vis de la surface intérieure de la pièce externe ;
- une couche d'élastomère entre la pièce externe et la pièce interne.
La surface latérale extérieure de la pièce interne comprend au moins une portion irrégulière et la surface latérale intérieure de la pièce externe comprend au moins une portion irrégulière complémentaire de la portion irrégulière de la surface externe de la pièce interne. Par ailleurs, la couche d'élastomère comprend une première face adhérée sur la portion irrégulière de la surface extérieure latérale de la pièce interne, et une deuxième face, opposée à la première face, adhérée sur la portion irrégulière de la surface intérieure latérale de la pièce externe. La couche d'élastomère, lorsque vue en coupe dans un plan longitudinal comprenant l'axe de fixation, comprend :
- de chaque côté de l'axe de fixation, au moins trois portions dites longitudinales, réparties dans la direction de l'axe de fixation selon un pas prédéterminé, au moins une des trois portions longitudinales travaillant à l'opposé des deux autres portions selon la direction de l'axe longitudinal et
- au moins deux portions dite transversales, travaillant dans une direction transverse à l'axe de fixation, une première portion étant située d'un premier côté de l'axe de fixation et la deuxième portion étant située de l'autre côté de l'axe de fixation.

Le dispositif forme ainsi un insert amortissant, notamment pour le montage d'équipements sur le corps d'un satellite, ou encore pour réaliser l'interface entre un satellite et son lanceur, dont les caractéristiques d'amortissement peuvent être aisément adaptées en fonction des besoins. En effet, la couche d'élastomère étant localisée sur des irrégularités des surfaces latérales des pièces internes et externes, la géométrie de la couche d'élastomère peut être modifiée sans modifier la géométrie globale de l'insert. En particulier, le nombre, le pas et les dimensions des portions longitudinales et des portions transversales peuvent être adaptés.

Selon un mode de réalisation, la portion irrégulière de la surface externe de la pièce interne et la portion irrégulière de la surface interne de la pièce externe comprennent des anneaux autour de la direction longitudinale. La couche d'élastomère adhérée à ces anneaux forme ainsi les portions longitudinales et transversales. En adaptant la géométrie des anneaux, la géométrie de la couche d'élastomère est également adaptée. Par exemple, les anneaux peuvent être sensiblement perpendiculaires à la direction longitudinale et de forme rectangulaire.

Selon un autre mode de réalisation, la portion irrégulière de la surface externe de la pièce interne comprend au moins un filet autour de la direction longitudinale, et la portion irrégulière de la surface interne de la pièce externe comprend au moins un filet complémentaire du filet de la pièce interne, et la couche d'élastomère recouvrant les filets au moins partiellement. Ainsi, en adaptant la géométrie des filets, la géométrie de la couche d'élastomère et par là les caractéristiques du dispositif sont adaptées avantageusement en fonction des besoins. La forme en filet permet en outre de faciliter l'assemblage de la pièce interne dans la pièce externe en autorisant le vissage. Les filets peuvent prendre de multiple forme. On peut citer des filets rectangulaires ou triangulaires. Dans ce dernier cas, les portions transversales et les portions longitudinales de la couche d'élastomère sont confondues.

De préférence, la pièce interne et la pièce externe sont des pièces métalliques. Leurs propriétés physiques sont telles qu'elles assurent une bonne tenue mécanique pour les applications, notamment dans l'aéronautique, envisagées. En outre, les pièces interne et externe peuvent être obtenues par fonderie, ou par impression 3D.

Lorsque le dispositif est au repos, l'épaisseur de la couche d'élastomère, entre ses deux faces, est de préférence constante, de sorte que la pièce interne est centrée dans la pièce externe, permettant un meilleur contrôle des performances.

Selon un mode de réalisation, la couche en élastomère est continue dans la direction longitudinale et autour de la direction longitudinale, de sorte que la couche d'élastomère se présente sous la forme d'une unique pièce monobloc en élastomère. La couche d'élastomère fournit ainsi un amortissement quelque soit la direction de sollicitations.

La pièce interne peut comprendre un perçage, par exemple taraudé, afin de permettre son assemblage au premier élément simplement, par utilisation de visserie.

Selon un deuxième aspect, l'invention propose un procédé de fabrication du dispositif de fixation amortissant tel que présenté ci-dessus, comprenant les étapes suivantes :
- fabrication d'une ébauche de dispositif comprenant une ébauche de pièce interne sur laquelle une surface extérieure est formée et une ébauche de pièce externe sur laquelle une surface intérieure est formée, la surface intérieure de l'ébauche de pièce externe étant en vis-à-vis de la surface extérieure de l'ébauche de pièce interne ;
- insertion d'un élastomère entre la surface extérieure de l'ébauche de pièce interne et la surface intérieure de l'ébauche de pièce externe ;
- adhérisation de l'élastomère d'une part sur la surface extérieure de l'ébauche de pièce interne et d'autre part sur la surface intérieure de l'ébauche de pièce externe.

L'étape d'insertion de l'élastomère est par exemple une étape d'injection.

Selon un premier mode de réalisation du procédé, la fabrication de l'ébauche de dispositif comprend les opérations suivantes :
- usinage de l'ébauche de pièce interne, la surface externe formant un filetage,
- usinage de l'ébauche de la pièce externe, la surface interne formant un taraudage complémentaire du filetage,
- vissage de l'ébauche de pièce interne dans l'ébauche de pièce externe pour obtenir l'ébauche de dispositif.

Selon un deuxième mode de réalisation du procédé, la fabrication de l'ébauche de dispositif comprend les opérations suivantes :
- impression tridimensionnelle simultanée de l'ébauche de pièce externe et de l'ébauche de pièce interne en position dans l'ébauche de pièce externe,
- fabrication d'au moins un pontet entre l'ébauche de pièce externe et l'ébauche de pièce interne assurant le maintien de leur position relative.

Le procédé comprend enfin de préférence une étape finale d'usinage de l'ébauche aux dimensions finales souhaitées du dispositif.

Selon un troisième aspect, l'invention propose une ensemble comprenant au moins deux éléments assemblés au moyen d'au moins un dispositif tel que présenté ci-dessus, la pièce externe étant fixée rigidement à un premier élément, la pièce interne étant fixée rigidement sur le deuxième élément.

Lorsque la pièce interne comprend un perçage, le deuxième élément est fixé rigidement à la pièce interne par l'intermédiaire d'une vis traversant le perçage.

Dans un premier exemple, le premier élément est une structure porteuse, tel que le corps d'un satellite et le deuxième élément est un équipement du satellite.

Dans un deuxième exemple, le premier élément est un anneau d'interface lanceur et le deuxième élément est un anneau d'interface satellite.

Selon un quatrième aspect, l'invention propose un procédé d'assemblage d'un ensemble support tel que présenté ci-dessus, comprenant une étape de fixation rigide de la pièce externe du dispositif de fixation sur le premier élément et une étape de fixation rigide du deuxième élément sur la pièce interne du dispositif de fixation.

D'autres avantages apparaîtront à la lumière de la description de modes de réalisation particuliers de l'invention accompagnée des figures dans lesquelles :
La figure 1 est une vue en coupe longitudinale d'un premier mode de réalisation d'un dispositif de fixation amortissant, logé dans un premier élément de type plaque ;
La figure 2 est une vue en coupe longitudinale d'une pièce externe du dispositif de la figure 1 ;
La figure 3 est une vue en coupe longitudinale d'une pièce interne du dispositif de la figure 1 ;
La figure 4a est une vue en coupe longitudinale similaire à celle de la figure 1, un deuxième élément étant assembler sur le premier ;
La fige 4b est une vue de détail de la figure 4a ;
La figure 5a est une vue similaire à celle de la figure 4a pour une variante du dispositif de fixation amortissant selon le premier mode de réalisation ;
La figure 5b est une vue de détail de la figure 5a ;
La figure 6a est une vue en coupe longitudinale d'une pièce interne et d'une pièce externe d'un dispositif de fixation amortissant selon un deuxième mode de réalisation ;
La figure 6b est une vue de détail de la figure 6a ;
La figure 7 est un premier exemple d'un ensemble comprenant deux éléments assemblés ;
La figure 8 est un deuxième exemple d'un ensemble comprenant deux éléments assemblés ;
Les figures 9a à 9e représentent chacune une étape d'un premier mode de réalisation d'un procédé de fabrication du dispositif de fixation amortissant ;
Les figures 10a à 10d représentent chacune une étape d'un deuxième mode de réalisation d'un procédé de fabrication du dispositif de fixation amortissant ;
La figure 11a est une vue en coupe longitudinale du dispositif de fixation amortissant obtenu selon une variante du deuxième mode de réalisation du procédé de fabrication ;
La figure 11b est une vue de détail de la figure 11a.

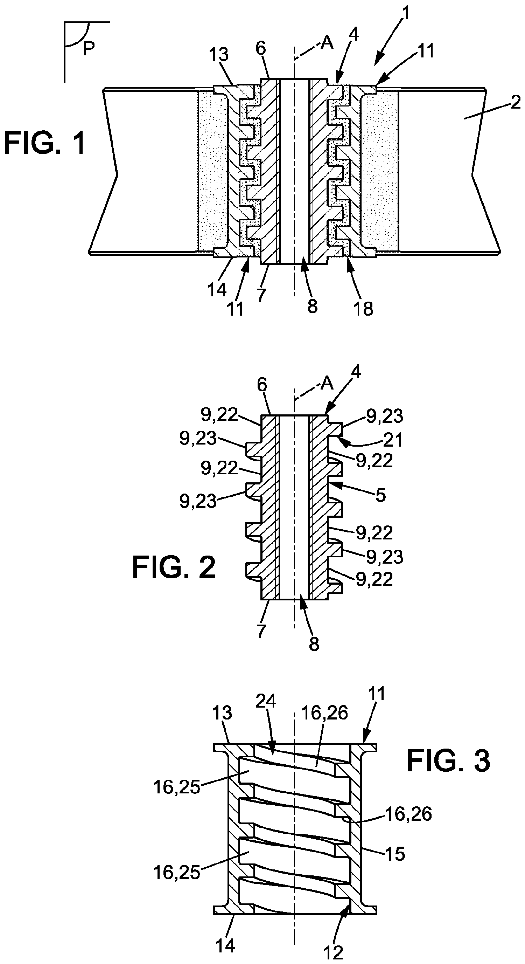

Sur la figure 1, il est représenté un dispositif 1 de fixation amortissant, dans son ensemble, destiné à assurer à la fois la fixation et la filtration de vibrations entre deux éléments, notamment d'un satellite. Par exemple, un premier élément 2 est une structure porteuse, tel qu'un corps, du satellite, générateur de vibrations, et le deuxième élément 3 est un équipement, ou un ensemble d'équipements et d'instruments, du satellite à isoler des vibrations. Seule la structure 2 porteuse est illustrée partiellement sur la figure 1. Il s'agit par exemple d'un panneau présentant une structure en nid d'abeille. Un tel dispositif 1 de fixation est également appelé insert. Un tel insert permet de ne pas rajouter substantiellement du poids ni d'augmenter l'encombrement, puisqu'il vient de loger dans un des éléments à assembler.

Le dispositif 1 de fixation amortissant comprend une pièce **4** interne, de forme générale tubulaire d'axe **A** de fixation. La pièce 4 interne présente une surface **5** latérale extérieure, et s'étend longitudinalement entre deux surfaces **6**, **7** transversales sensiblement planes. Elle est de préférence métallique.

Dans ce qui suit, l'adjectif « longitudinal » et ses variantes désignent une direction parallèle à l'axe A de fixation ; l'adjectif « transversal » et ses variantes désignent toute direction comprise dans un plan perpendiculaire à l'axe A de fixation.

Le terme « extérieur » doit être compris comme qualifiant ce qui est éloigné ou tourné dans le sens opposé de l'axe A de fixation, alors que le terme « intérieur » doit être compris, a contrario, comme qualifiant ce qui est proche ou tourné vers l'axe A de fixation.

Une première surface 6 transversale de la pièce 4 interne est dite supérieure, et est destinée à être en contact contre l'équipement 3 de satellite à fixer. La deuxième surface 7 transversale est alors dite inférieure. Les adjectifs « supérieur » et « inférieur » sont pris ici à des fins de simplification de la description en référence à l'orientation naturelle des figures, et ne doivent pas être interprétés comme impliquant une quelconque limitation structurelle.

La pièce 4 interne présente en outre un perçage **8** symétrique de révolution autour de l'axe A de fixation qui, comme cela sera explicité plus loin, est avantageusement taraudé.

La paroi 5 extérieure est irrégulière sur au moins une portion, c'est-à-dire qu'elle présente, dans un plan P longitudinal comprenant l'axe A de fixation, au moins un relief **9**.

Par relief, on entend ici un creux suivi d'une saillie, c'est-à-dire un renfoncement sur la surface 5 extérieure vers l'axe A de fixation, suivi dans la direction de l'axe A de fixation d'une protubérance sur la surface 5 extérieure s'éloignant de l'axe A de fixation. Chaque relief forme alors dans la direction de l'axe A de fixation au moins trois portions de la surface 5 extérieure, au moins une des portions étant orientée selon l'axe A de fixation dans une direction opposée aux deux autres. Plus précisément, pour chaque relief de la surface 5 extérieure, il est défini successivement dans la direction de l'axe A de fixation une première portion orientée selon l'axe A de fixation dans une première direction, une deuxième portion orientée dans la deuxième direction opposée à la première, et une troisième portion orientée dans la première direction.

Le dispositif 1 de fixation comprend en outre une pièce **11** externe, de forme générale également tubulaire, également d'axe A de fixation. La pièce 11 externe présente une surface **12** latérale intérieure. La pièce 11 externe s'étend également entre deux surfaces **13**, **14** transversales, à savoir une première surface 13 dite supérieure, pouvant à être en contact avec l'équipement 2 de satellite et une deuxième surface 14 dite inférieure. La pièce 11 externe présente en plus une surface **15** latérale extérieure qui, comme cela sera explicité plus loin, sert d'interface pour la fixation sur le panneau 3 de satellite. Elle est également de préférence métallique.

Le diamètre de la surface 12 latérale intérieure de la pièce 11 externe est supérieur au diamètre de la surface 5 latérale intérieure de la pièce 4 interne, de sorte que la pièce 4 interne peut être logée, dans la pièce 11 externe, la surface 5 latérale extérieure de la pièce 4 interne étant en vis-à-vis de la surface 12 latérale intérieure de la pièce 11 externe. Plus précisément, la surface 12 latérale intérieure de la pièce 11 externe comprend également au moins une portion irrégulière, complémentaire de la portion irrégulière de surface 5 latérale extérieure de la pièce 4 interne, de sorte que la pièce 4 interne peut être logée dans la pièce 11 externe, la surface 5 latérale extérieure de la pièce 4 interne étant en vis-à-vis de la surface 12 latérale intérieure de la pièce 11 externe. Plus précisément, dans un plan P longitudinal comprenant l'axe A de fixation, la pièce 11 externe comprend au moins un relief **16** complémentaire du relief 9 de la pièce 4 interne, s'étendant également à 360° autour de l'axe A de fixation. Plus précisément, lorsque le relief 9 de la pièce 4 interne est, selon la direction longitudinale, un creux suivi d'une saillie, alors le relief 16 de la pièce 11 externe est une saillie, c'est-à-dire qu'il forme une protubérance sur la paroi 12 latérale intérieure vers l'axe A de fixation, suivie d'un creux, c'est-à-dire qu'il forme sur la surface 12 latérale intérieure un renfoncement à l'opposé de l'axe A de fixation ; a contrario, lorsque le relief 9 de la pièce interne est une saillie suivie d'un creux, le relief 16 de la pièce 11 externe est un creux suivi d'une saillie. En outre, le relief 9 de la pièce 4 interne et le relief 16 de la pièce 11 externe sont dimensionnés de sorte qu'ils peuvent se loger l'un dans l'autre.

Les dimensions de la pièce 4 interne et de la pièce 11 externe sont telles qu'un espace est formé entre la surface 5 latérale extérieure de la pièce 4 interne et la surface 12 latérale intérieure de la pièce 11 externe. Cet espace peut ne pas être de dimensions constantes, même lorsque le dispositif 1 est au repos, c'est-à-dire lorsqu'il n'est soumis à aucun effort. Le dispositif 1 comprend alors des moyens amortisseurs placés dans cet espace, entre les deux reliefs 9, 16. Les moyens amortisseurs comprennent au moins une couche **18** d'élastomère. La couche 18 présente une épaisseur définie entre une première surface **19**, dite surface intérieure, adhérée à la portion irrégulière de la surface 5 latérale extérieure de la pièce 4 intérieure et une deuxième surface **20**, dite surface extérieure, adhérée à la portion irrégulière de la surface 12 latérale intérieure de la pièce 11 externe. De préférence, mais non nécessairement, lorsque le dispositif 1 est au repos, l'épaisseur de la couche 18 d'élastomère est constante, de sorte que le comportement du dispositif 1 est symétrique quelque soit la direction des efforts appliquées. La couche 18 d'élastomère s'étend en continu autour de l'axe A de fixation, c'est-à-dire qu'elle remplit totalement, sur 360°, l'espace autour de l'axe A de fixation entre la surface 12 latérale intérieure de la pièce 11 interne et la surface 5 latérale extérieure de la pièce 4 interne. De préférence, l'espace, et donc la couche 18 d'élastomère, sont centrés sur l'axe A de fixation.

Par « adhérée » on désigne ici l'assemblage de la couche 18 d'élastomère sur la pièce 4 interne et sur la pièce 11 externe par tout mécanisme d'adhésion, c'est-à-dire qu'un contact intime est formé d'une part entre la surface 19 intérieure de la couche 18 d'élastomère sur la surface 5 latérale extérieure de la pièce 4 interne et d'autre part entre la surface 20 extérieure de la couche 18 d'élastomère et la surface 12 latérale intérieure de la pièce 11 externe, de sorte que les surfaces 19, 20 de la couche 18 d'élastomère ne se déplacent pas par rapport à la pièce 4 interne et à la pièce 11 externe. L'adhésion peut alors être directe ou être réalisée par l'intermédiaire d'un autre matériau, par exemple une colle.

De par les reliefs 9, 16, quelque soit la direction et le sens des efforts dus aux vibrations, la couche 18 d'élastomère amortit les vibrations, et l'amortissement par la couche 18 d'élastomère est adaptable en fonction des besoins.

En effet, grâce aux reliefs 9, 16, la couche 18 d'élastomère comprend toujours des portions travaillant en traction et des portions travaillant en compression de manière complémentaire.

Le fonctionnement du dispositif 1 de fixation et d'amortissement va être explicité en référence à des modes de réalisation.

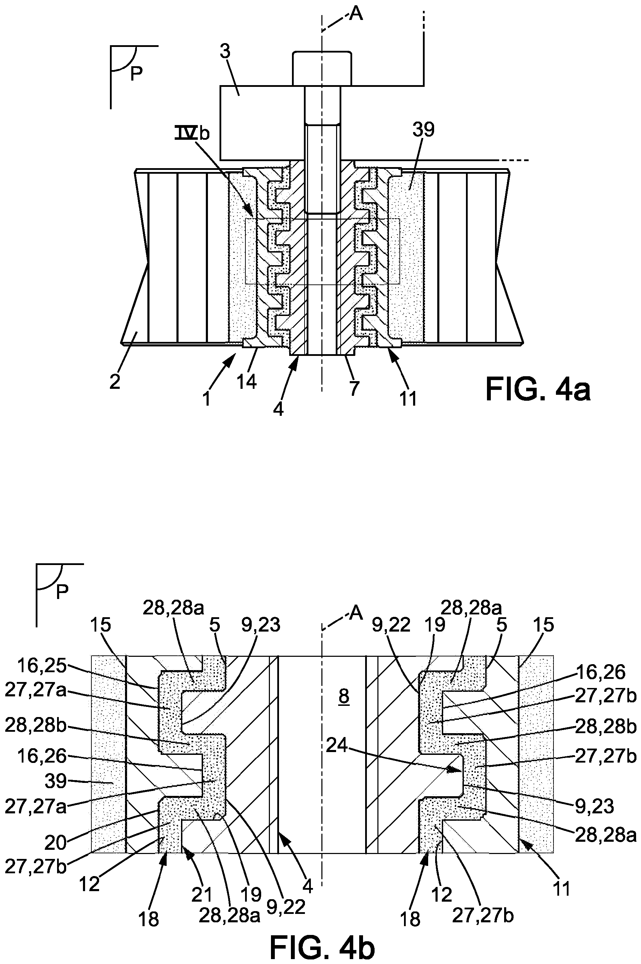

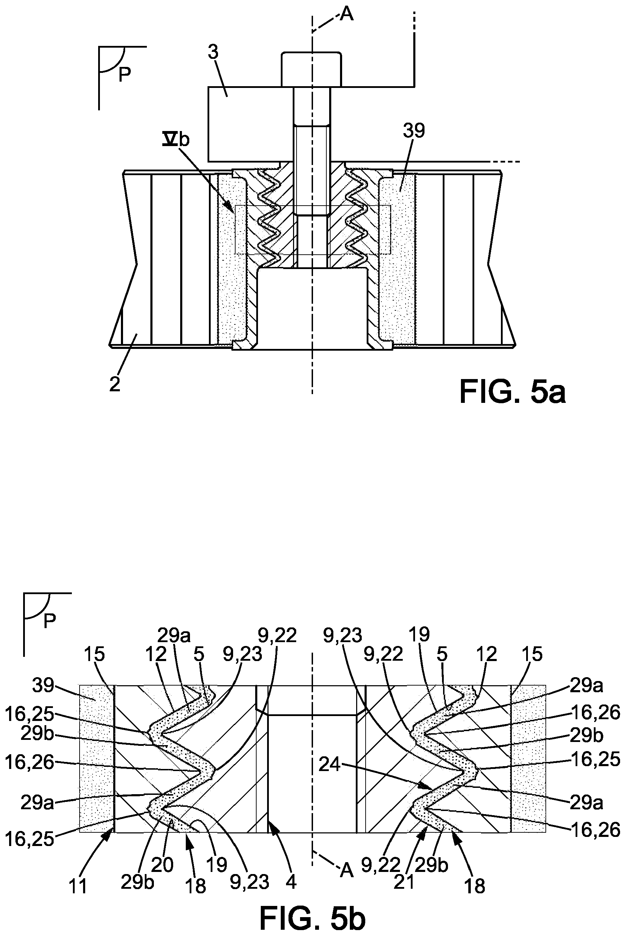

Selon un premier mode de réalisation, illustré sur les figures 1 à 5a et 5b, le relief 9 de la pièce 4 interne est formé par un filet **21** sa surface 5 latérale extérieure, à la manière d'un filetage, et décrivant au moins 360° autour de l'axe A de fixation. En variante, les reliefs 9 peuvent être formés par une pluralité de filets 21. Ainsi, lorsque vu en coupe longitudinale dans un plan P contenant l'axe A de fixation comme illustré sur la figure 1, le filet 21 forme sur la surface 5 latérale extérieure de la pièce 4 interne des irrégularités sous la forme d'une succession, dans la direction de l'axe A de fixation, de creux **22** et de saillies **23**, et ce de part et d'autre de l'axe A de fixation.

De même, le relief 16 de la pièce 11 externe est formé par au moins un filet **24** sur sa surface 12 latérale intérieure, à la manière d'un taraudage, et décrivant au moins 360° autour de l'axe A de fixation. Ainsi, lorsque vu en coupe longitudinale dans un plan P contenant l'axe A de fixation comme illustré sur la figure 1, le filet 24 forme sur la surface 12 latérale intérieure de la pièce 11 externe des irrégularités sous la forme d'une succession, dans la direction de l'axe A de fixation, de creux **25** et de saillies **26**, et ce de part et d'autre de l'axe A de fixation.

Selon un premier exemple du premier mode de réalisation, les filets 21, 24 sont de forme carrée ou rectangulaire, de sorte que la section transversale des creux 22, 25 et des saillies 23, 26 est également carrée ou rectangulaire. La couche 18 d'élastomère recouvre les filets 21, 24, de sorte que la couche 18 d'élastomère comprend deux tronçons **27** dits transversaux, dont l'épaisseur est définie dans la direction transversale. Un premier tronçon 27 transversal recouvre le sommet du filet 24 de la pièce 11 externe, c'est-à-dire recouvre le fond des creux 22 de la pièce 4 interne et l'extrémité des saillies 26 de la pièce 11 externe. Le deuxième tronçon 27 transversal recouvre le sommet du filet 21 de la pièce 4 interne, c'est-à-dire recouvre l'extrémité des saillies 23 de la pièce 4 interne et le fond des creux 25 de la pièce 11 externe. La couche 18 d'élastomère comprend en outre deux tronçons **28** dits longitudinaux, dont l'épaisseur est définie dans la direction longitudinale, reliant les tronçons 27 transversaux entre eux, en suivant les reliefs 9, 16.

Lorsque vu en coupe dans un plan P longitudinal comprenant l'axe A de fixation, la couche 18 d'élastomère comprend alors des portions travaillant longitudinalement en traction et en compression à l'opposé les unes des autres, et des portions travaillant en cisaillement, quelque soit la direction des efforts appliqués entre la pièce 4 interne et la pièce 11 externe. Plus précisément, toujours lorsque vu en coupe dans un plan P longitudinal, les tronçons 28 longitudinaux forment, de chaque côté de l'axe A de fixation, des portions 28a, 28b longitudinales, se succédant dans la direction longitudinale selon un pas déterminé. Chaque tronçon 27 transversal comprend d'un côté de l'axe A de fixation des premières portions 27a transversales décalées les unes des autres en créneau dans la direction transversale et de l'autre côté des deuxièmes portions 27b transversales, également décalées les unes des autres en créneau dans la direction transversale.

Ainsi, lorsque le dispositif 1 est sollicité dans une direction longitudinale, les tronçons 28 longitudinaux travaillent longitudinalement, en traction et en compression, et les tronçons 27 transversaux travaillent transversalement, en cisaillement. Plus précisément, dans ce cas, lorsque vu dans un plan P longitudinal, si une portion 28a longitudinale d'un premier tronçon 28 longitudinal travaille en compression, alors la portion 28b longitudinale suivante, du deuxième tronçon 28 longitudinal, travaille en traction, et inversement. Grâce aux reliefs 9, 16, il y a toujours au moins trois portions 28a, 28b, longitudinales, dont au moins une travaille longitudinalement à l'opposé des deux autres. Par exemple, si une première portion 28a d'un premier tronçon 28 travaille en traction, alors la portion 28b suivante dans la direction longitudinale, du deuxième tronçon 28 longitudinal, travaille en compression, et la troisième portion 28a, du premier tronçon 28 longitudinal, travaille en traction. De préférence, le dispositif comprend au moins quatre portions 28a, 28b longitudinales, deux portions 28a d'un premier tronçon 28 longitudinal travaillant dans une direction longitudinale et deux portions 28b du deuxième tronçon longitudinal travaillant dans l'autre direction longitudinale. Les portions 27a, 27b transversales travaillent dans ce cas en cisaillement.

Lorsque le dispositif 1 est sollicité dans une direction transversale, les tronçons 28 longitudinaux travaillent en cisaillement, et les tronçons 27 transversaux travaillent en traction et en compression. Plus précisément, en considérant un plan P transversal comprenant l'axe A de fixation, lorsque le dispositif 1 est sollicité dans une direction transversale, de sorte que les portions 27a transversales d'un côté de l'axe A de fixation travaillent par exemple en traction, alors les portions 27b transversales situées de l'autre côté de l'axe A de fixation travaillent en compression, et inversement.

Selon un deuxième exemple du premier mode de réalisation, les filets 21, 24 sont de forme triangulaire, de sorte que la section transversale des creux 22, 25 et des saillies 23, 26 est également triangulaire. Ainsi, lorsque vus en coupe longitudinale dans un plan comprenant l'axe A de fixation, les creux 22, 25 et les saillies 23, 26 forment un motif en dents de scie. La couche 18 d'élastomère recouvrant les filets 21, 24 présentent alors au moins deux tronçons **29** inclinés l'un par rapport à l'autre dans un plan P longitudinal, chaque tronçon 29 étant orienté, selon son épaisseur, à la fois selon une composante longitudinale et selon une composante transversale. Plus précisément, lorsque le dispositif est vu en coupe dans un plan P longitudinal, un premier tronçon 29 comprend des portions 29a à distance les unes des autres selon la direction longitudinale et, mais non nécessairement, parallèles les unes aux autres, et le deuxième tronçon 29 comprend des portions 29b également à distance les unes des autres et, mais non nécessairement, parallèles les unes aux autres, les portions 29a du premier tronçon 29 étant inclinées par rapport aux portions 29b du deuxième tronçon 29, de manière à définir, de chaque côté de l'axe A de fixation, un motif en dents de scie.

Lorsque le dispositif 1 est sollicité dans une direction longitudinale, un premier tronçon 29 travaille longitudinalement en traction et transversalement en cisaillement, tandis que le deuxième tronçon 29 travaille longitudinalement dans le sens opposé, c'est-à-dire en compression, et transversalement en cisaillement. Plus précisément, lorsque les portions 29a d'un premier tronçon 29 travaille en traction, alors les portions 29b du deuxième tronçon 29 travaille en compression, et inversement. De même que précédemment, grâce aux reliefs 9, 16 formés par les filets 21, 24, il y a toujours au moins trois portions 29a, 29b travaillant longitudinalement, avec au moins une des trois portions qui travaille longitudinalement à l'opposé des deux autres. Par exemple, une première portion 29a d'un premier tronçon 29 travaille en traction, la deuxième portion 29b dans la direction longitudinale, du deuxième tronçon 29, travaille en compression, et la troisième portion 29a dans la direction longitudinale, du premier tronçon 29, travaille en traction. Ainsi, en contrebalançant le travail dans une direction de deux portions 29a par au moins une portion 29b travaillant dans la direction opposée, les comportements non-linéaires sont réduits. De préférence, le dispositif comprend au moins quatre portions 29a, 29b, à savoir deux portions de chaque tronçon 29, afin d'avoir toujours deux portions travaillant en compression et deux portions travaillant en traction.

Lorsque le dispositif 1 est sollicité dans une direction transversale, chaque tronçon 29 incliné travaille en cisaillement et en traction ou en compression. Plus précisément, en considérant un plan P transversal comprenant l'axe A de fixation, lorsque sous l'effet d'une sollicitation dans la direction transversale, les portions 29a, 29b des tronçons 29 situées d'un côté de l'axe A de fixation travaillent par exemple en traction, alors les portions 29a, 29b de l'autre côté de l'axe A de fixation travaille en compression, et inversement.

Ainsi, quelque soit la direction des efforts dues aux vibrations, la couche 18 d'élastomère travaille toujours à la fois en traction, en compression et en cisaillement.

La forme des filets 21, 24 peut être quelconque. Par exemple, les filets 21, 24 peuvent être trapézoïdaux ou arrondis.

En jouant simplement sur le pas des filets 21, 24 et sur leur nombre, il est possible de régler la quantité de matière de la couche 18 d'élastomère, et de régler ainsi la raideur et le coefficient d'amortissement du dispositif 1. Le réglage du pas des filets 21, 24 permet également de jouer sur la dimension des creux 22, 25 et des saillies 23, 26, de manière à déterminer quelle est la direction pour laquelle les vibrations seront amorties préférentiellement ou à l'inverse de manière restreinte.

Le premier mode de réalisation du dispositif 1 de fixation et d'amortissement permet notamment de maintenir la pièce 4 externe et la pièce 11 interne assemblées l'une à l'autre par vissage, comme cela sera vu plus loin, même en cas de rupture de la couche 18 d'élastomère.

Selon un deuxième mode de réalisation, la pièce 4 interne et la pièce 11 externe comprennent chacune une pluralité de reliefs 9, 16.

Les reliefs 9 de la pièce 4 interne sont formés par des anneaux **30** symétriques de révolution, mais non nécessairement, autour de l'axe A de fixation, formant saillie sur la surface 5 latérale. Ainsi, les anneaux 30 forment en eux-mêmes des saillies **31** et forment entre deux anneaux 30 successifs dans la direction longitudinale des creux **32**. Dans un plan longitudinal comprenant l'axe A de fixation, les saillies 31 et les creux 32 sont donc symétriques par rapport à l'axe A de fixation.

De même, toujours selon le deuxième mode de réalisation, les reliefs 16 de la pièce 11 externe sont formés par des anneaux **33** symétriques de révolution, mais non nécessairement, autour de l'axe A de fixation, en saillie sur la surface 12 latérale intérieure de la pièce 11 externe. Les anneaux 33 forment en eux-mêmes des saillies **34** sur la surface 12 latérale intérieure de la pièce 11 externe et forment entre deux anneaux 33 successifs adjacents, dans la direction longitudinale, des creux **35**.

Selon l'exemple illustré, mais non nécessairement, les anneaux 30, 33 sont de section carrée ou rectangulaire et s'étendent perpendiculairement à la direction longitudinale, c'est-à-dire qu'ils s'étendent transversalement sur la surface 5 extérieure de la pièce 4 intérieure et la surface 12 intérieure de la pièce 11 externe. Ainsi, la couche 18 d'élastomère s'étend entre les saillies 31, 34 et les creux 32, 35 des deux pièces 4, 11, de sorte que lorsque vue en coupe longitudinale dans un plan comprenant l'axe A de fixation, la couche 18 d'élastomère forme des créneaux, de part et d'autre de l'axe A de fixation.

Plus précisément, la couche 18 d'élastomère comprend une pluralité de tronçons **37** transversaux, dont l'épaisseur est définie dans une direction transversale, comprise entre l'extrémité d'une saillie 31 de la pièce 4 interne et le fond d'un creux 35 de la pièce 11 externe et entre l'extrémité d'une saillie 34 de la pièce 11 externe et le fond d'un creux 32 de la pièce 4 interne. La couche 18 d'élastomère comprend également une pluralité de tronçons **38** longitudinaux, dont l'épaisseur est définie dans la direction longitudinale, reliant entre elles les tronçons 37 transversaux deux à deux. Ainsi, chaque saillie 31, 34 est recouverte de deux tronçons 38 longitudinaux et d'un tronçon transversal. Lorsque vu dans un plan P longitudinal comprenant l'axe A de fixation, les tronçons 37 transversaux forment ainsi, d'un côté de l'axe A de fixation, des portions 37a transversales, décalées les unes des autres en créneau dans la direction transversale, et de l'autre côté de l'axe A de fixation, des portions 37b transversales également décalées les unes des autres en créneau dans la direction transversale. Les tronçons 38 longitudinaux forment quant à eux des portions 38a, 38b longitudinales, à distance les unes des autres longitudinalement selon un pas déterminé, sur chaque saillie 31, 34, deux portions 38a, 38b longitudinales et une portion 37a, 37b transversale sont adhérées.

Ainsi, le comportement de la couche 18 d'élastomère est sensiblement similaire à ce qui a été décrit dans le premier mode de réalisation avec les filets carrés ou rectangulaires.

Lorsque le dispositif 1 selon ce deuxième mode de réalisation est sollicité dans une direction longitudinale, les tronçons 37 transversaux travaillent en cisaillement et les tronçons 38 longitudinaux travaillent en traction et en compression. Plus précisément, lorsque vue en coupe dans un plan P longitudinal comprenant l'axe A, lorsqu'une portion 38a longitudinale d'un premier tronçon 38 longitudinal travaille en compression, alors la portion 38b longitudinale suivante dans la direction longitudinale travaille en compression, et ainsi de suite.

Lorsque le dispositif 1 est sollicité dans une direction transversale, les tronçons 37 transversaux travaillent en traction et en compression, et les tronçons 38 longitudinaux travaillent en cisaillement. Plus précisément, lorsque vue en coupe dans un plan P longitudinal comprenant l'axe A, lorsqu'une portion 37a d'un tronçon 37 transversal, d'un premier côté de l'axe A de fixation, travaille en compression, alors la portion 37b de ce même tronçon 37 transversal de l'autre côté de l'axe A de fixation travaille en traction, et inversement.

Ainsi, de même que précédemment, quelque soit la direction et le sens des efforts dus aux vibrations, la couche 18 d'élastomère travaille toujours en même temps en traction, en compression et en traction.

La forme des anneaux 30, 33 n'est pas nécessairement carrée ou rectangulaire, mais peut être triangulaire, trapézoïdale ou encore arrondie.

La raideur et le coefficient d'amortissement du dispositif peuvent ainsi être réglés simplement en adaptant le nombre d'anneaux 30, 33 et leur distance entre eux, afin d'obtenir des portions 37a, 37b transversales et 38a, 38b longitudinales présentant les caractéristiques dimensionnelles déterminées.

Le dispositif 1 de fixation et d'amortissement ainsi formé présente une grande adaptabilité, et ce pour un encombrement donné.

En effet, l'encombrement du dispositif 1 de fixation est donné par les dimensions extérieures de la pièce 11 externe. Or, il n'est pas nécessaire de modifier ces dimensions pour modifier les caractéristiques du dispositif 1.

Notamment, en dimensionnant les reliefs 9, 16, c'est-à-dire les filets 21, 24 ou les anneaux 30, 33, il est possible d'obtenir des performances différentes pour le dispositif 1 en fonction des applications souhaitées. Par exemple, ainsi que cela a déjà été décrit, il est possible d'obtenir sur la couche 18 d'élastomère autant de matière qui travaille en traction et en compression à chaque instant en formant autant de portions qui travaillent en traction que de portions qui travaillent en compression, et ce à tout instant. Une telle disposition permet notamment de minimiser les comportements non linéaires de l'amortissement. Il est également possible de favoriser l'amortissement des vibrations selon la direction longitudinale ou les directions transversales en adaptant la dimension des portions de la couche 18 d'élastomère correspondantes. En jouant sur le pas entre les portions 28a et 28b, 29a et 29b, 38a et 38b, la raideur peut là aussi être adaptée.

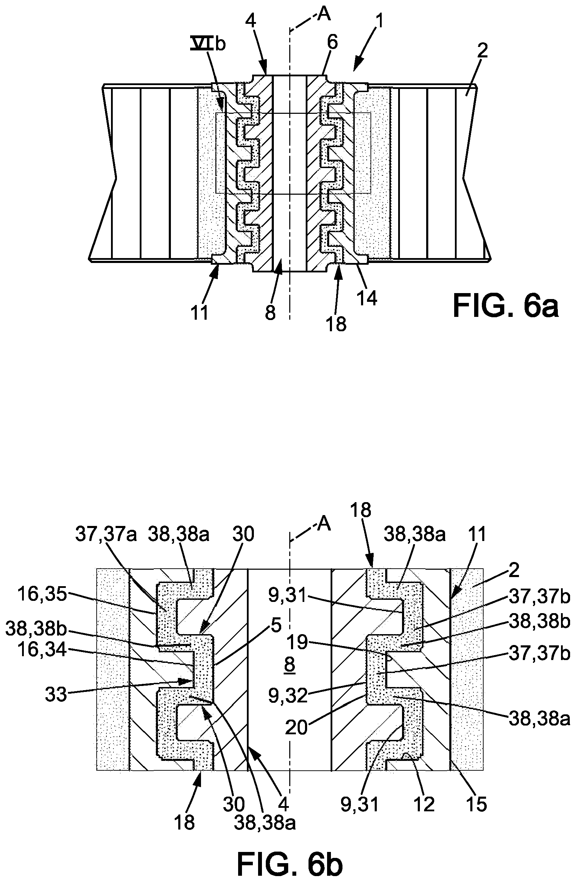

Par ailleurs, la dimension longitudinale de la pièce 4 interne peut être sensiblement égale à celle de la pièce 11 externe, de sorte que l'ensemble de la surface 12 latérale extérieure de la pièce 11 externe est en vis-à-vis de la surface 5 latérale extérieure de la pièce interne, comme cela est illustré sur les figures 1, 4a et 6b. Toutefois, il pourra en être autrement, et la dimension longitudinale de la pièce 4 interne peut tout à fait être inférieure à celle de la pièce 11 externe. Ainsi, il est par là encore possible d'adapter le nombre de portions de la couche 18 d'élastomère, et par là la raideur et le coefficient d'amortissement du dispositif 1.

Il est également possible, toujours pour un même encombrement, de modifier l'épaisseur de la couche 18 d'élastomère en modifiant le diamètre extérieur de la pièce 4 interne sans modifier les dimensions extérieures du dispositif 1.

De préférence, mais non nécessairement, seules la surface 5 latérale extérieure de la pièce 4 interne et la surface 12 latérale intérieure de la pièce 11 interne servent de support à la couche 18 d'élastomère et participent à l'amortissement, c'est-à-dire que leurs surfaces 6, 13 supérieures et 7, 14 inférieures sont dépourvues d'élément en élastomère. Or, la raideur du dispositif 1 est sensiblement proportionnelle à la surface totale adhérée de la couche 18 d'élastomère. En dimensionnant les reliefs 9, 16, la pièce 4 interne et la pièce 11 externe, il est alors possible d'obtenir la raideur souhaitée.

Ainsi, en localisant la couche 18 d'élastomère entre la surface 5 latérale extérieure de la pièce 4 interne et la surface 12 latérale intérieure de la pièce 11 externe, les modifications apportées aux reliefs 9, 16 permettent de modifier aisément, sans revoir les dimensions extérieures du dispositif 1, les caractéristiques de la couche 18 d'élastomère pour un encombrement du dispositif 1 donné.

Le dispositif 1 est monté entre le panneau 2 et l'équipement 3 de la manière suivante.

Le dispositif 1, comprenant la pièce 4 interne, la pièce 11 externe et la couche 18 d'élastomère reliant rigidement les deux pièces 4, 11, est placé dans une ouverture sur le panneau 2 prévue à cet effet. La surface 15 latérale extérieure de la pièce 11 externe est alors rigidement fixée sur le panneau 2, dans l'ouverture prévue. Par exemple, le diamètre de l'ouverture dans le panneau est supérieur au diamètre extérieur de la pièce 11 interne. L'espace entre la surface 15 latérale extérieure et la surface de l'ouverture dans le panneau 2 est rempli d'une substance **39** de type colle, assurant la fixation rigide. Le dispositif 1 est alors encastré dans le panneau 2. L'équipement 3 est ensuite fixé rigidement sur la pièce 4 interne. Par exemple, l'équipement 3 comprend une patte 40 qui vient en appui sur la surface 6 supérieure de la pièce 4 interne. La patte 40 comprend un perçage, qui est placé coaxialement au perçage 8 dans la pièce 4 interne. Un moyen de fixation de type vis **41** est alors inséré dans le perçage de la patte 40 et le perçage 8 de la pièce 4 interne, pour coopérer avec le taraudage du perçage 8 de la pièce 4 interne. L'équipement 3 est alors rigidement fixé sur la pièce 4 interne.

Le dispositif 1 permet ainsi d'assurer la fixation rigide entre le panneau 2 et l'équipement 3 tout en offrant un amortissement des vibrations du panneau 2 vers l'équipement 3, ou l'inverse, par la couche 18 d'élastomère.

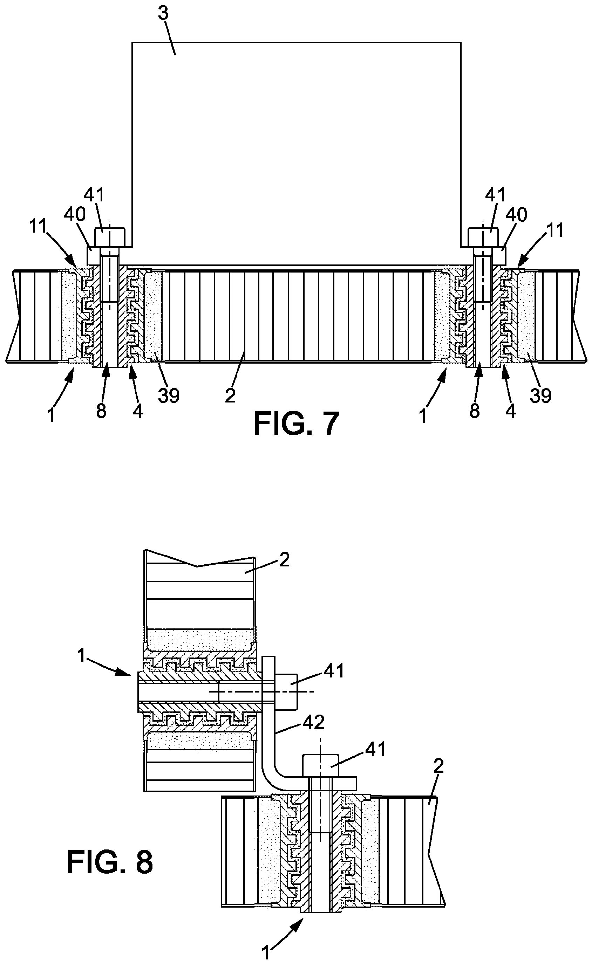

En pratique, une pluralité de dispositifs 1 est utilisée pour assurer la fixation entre le panneau 2 et l'équipement 3. Par exemple, les dispositifs 1 sont répartis à la périphérie de l'équipement 3, et sont disposés parallèlement les uns aux autres, c'est-à-dire que leurs axes A de fixation sont parallèles, comme illustré sur la figure 7.

En variante, les dispositifs 1 peuvent être disposés de manière à former un angle entre eux, c'est-à-dire que leurs axes A de fixation ne sont pas parallèles. Par exemple, sur la figure 8, deux dispositifs 1 sont disposés à 90°, pour permettre d'assembler rigidement deux éléments de type panneau 2 au moyen d'une plaque **42** intermédiaire.

En variante encore, le dispositif 1 peut être mis en oeuvre pour assembler des anneaux d'interface entre un lanceur et un satellite. Par exemple, le premier élément 2 est un anneau d'interface lanceur, monté sur un corps de satellite, et le deuxième élément 3 est un anneau d'interface satellite, monté sur un lanceur.

Il va maintenant être décrit un procédé de fabrication du dispositif 1 de fixation et d'amortissement. Comme déjà indiqué, la pièce 4 interne et la pièce 11 externe sont de préférence en métal. Une des difficultés dans le procédé de fabrication du dispositif 1 est de s'assurer que la position relative de pièce 4 interne par rapport à la pièce 11 externe est maintenue de manière à ce que l'espace entre elles respecte le dimensionnement voulu de la couche 18 d'élastomère.

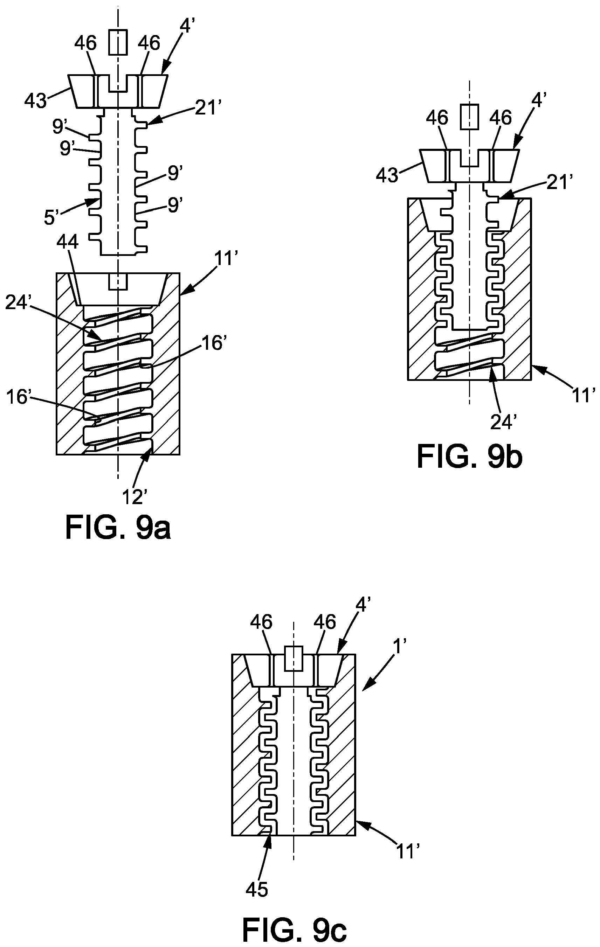

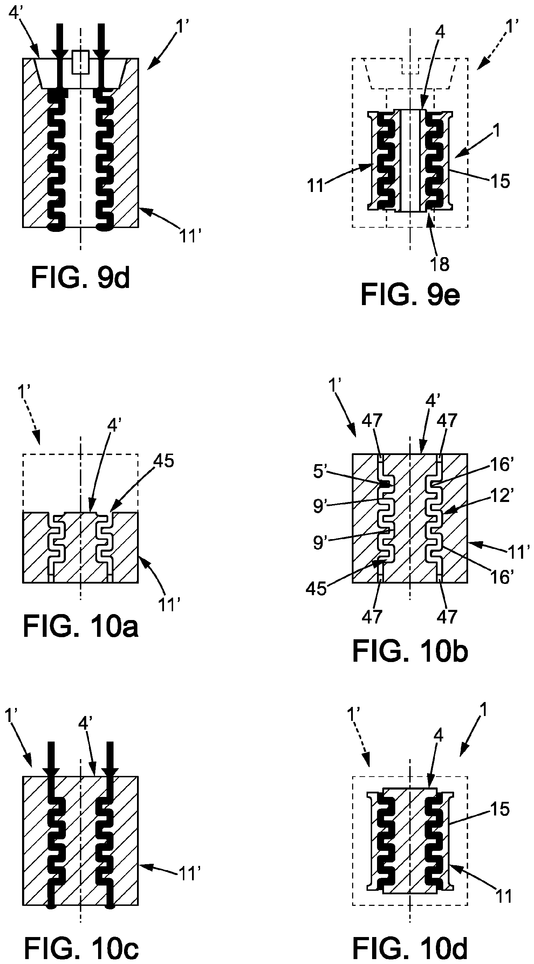

Selon un premier mode de réalisation du procédé de fabrication (figures 9a à 9e), la pièce 4 interne et la pièce 11 externe sont d'abord usinées chacune à partir d'une ébauche. En particulier une première ébauche 4', destinée à former la pièce 4 interne, a une surface 5' latérale extérieure qui est usinée de manière à présenter des reliefs 9' ; une deuxième ébauche 11', destinée à former la pièce 11 externe, a une surface 12' latérale intérieure qui et usinée de manière à présenter des reliefs 16' complémentaires de ceux 9' de la première ébauche 4'. Ce premier mode de réalisation du procédé de fabrication est particulièrement adapté au dispositif 1 décrit en référence au premier mode de réalisation, dans lequel les reliefs 9, 16 sont formés par des filets 21, 24. Ainsi, la surface 5' latérale de la première ébauche est filetée pour former un filet 21' et la surface 12' latérale intérieure de la deuxième ébauche 11' est taraudée pour former un filet 24' complémentaire.

Avantageusement, des moyens sont prévus pour assembler et centrer la première ébauche 4' avec la deuxième ébauche 11' selon l'axe A de fixation. Par exemple, la première ébauche 4' comprend à une extrémité une tête **43** conique, et la deuxième ébauche 11' comprend à une extrémité un épaulement formant siège **44** conique, complémentaire de la tête 43.

La première ébauche 4' peut alors être vissée dans la deuxième ébauche 11' grâce à leur filets 21', 24' complémentaires, jusqu'à ce que la tête 43 viennent se loger dans le siège 44 avec un jeu minimal, voire inexistant, assurant la position relative entre les deux ébauches 4', 11', dans lequel un espace **45** est formé entre elles.

Il est ainsi obtenu une ébauche 1', dont les dimensions sont supérieures à celle du dispositif 1 final.

Un élastomère peut alors être injecté dans l'espace 45. Par exemple, la tête 43 de la première ébauche 4' comprend des ouvertures **46** formant canaux pour l'injection sous pression de l'élastomère, pour former la couche 18 d'élastomère. L'élastomère remplit alors l'espace 45. Une étape d'adhérisation de l'élastomère sur la paroi 5' intérieure de la première ébauche 4' et sur la paroi 12' latérale intérieure de la deuxième ébauche 11' est prévue. L'adhérisation est obtenue par exemple en chauffant l'ensemble. L'élastomère est ainsi fixé rigidement aux ébauches 4', 11'.

En variante, avant de visser la première ébauche 4' dans la deuxième ébauche 11', le filet 21' de la première ébauche est recouvert d'un tube d'élastomère, lequel adhère sur la paroi 5' latérale extérieure. Puis, la première ébauche 4' ainsi recouverte est vissée avec force dans la deuxième ébauche 11'. Une étape supplémentaire d'adhérisation permet au tube d'élastomère d'adhérer sur la paroi 12' latérale intérieure de la première ébauche.

Enfin, l'ébauche 1' de dispositif 1 est usinée de manière à obtenir les dimensions finales souhaitée du dispositif 1 pour les surfaces 6, 13 supérieures, les surfaces 7, 14 inférieures et la surface 15 latérale extérieure de la pièce 11 externe. Notamment, la tête 43 et la siège 44 sont découpés.

Selon un deuxième mode de réalisation du procédé de fabrication (figures 10a à 10d), une première ébauche 4' de la pièce 4 interne est fabriquée simultanément avec une deuxième ébauche 5' de la pièce 5 interne, dans une même étape, au cours de laquelle la position relative entre les deux ébauches respecte la position relative finale entre la pièce 4 interne et la pièce 5 externe souhaitée.

Ainsi, selon un premier exemple, l'ébauche 1' du dispositif comprenant la première ébauche 4' et la deuxième ébauche 11' est fabriquée par impression tridimensionnelle, et plus particulièrement par la technique dite « ALM » (« Additive Layer Manufacturing »). La première ébauche 4' et la deuxième ébauche 11' sont alors obtenues simultanément. Comme précédemment, la première ébauche 4' présente sur la surface 5' extérieure des reliefs 9' complémentaires de reliefs 16' sur la surface 12' intérieure de la deuxième ébauche 11'.Des pontets **47** de matière sont formés sur l'ébauche 1' complète aux deux extrémités entre les deux ébauches 4', 11' afin de maintenir leur positionnement relatif, un espace 45 étant formé entre elles.

En variante, les deux ébauches 4', 11' formant l'ébauche 1' complète et les pontets 47 peuvent être obtenus par fonderie.

L'élastomère est injecté entre les pontets 47 dans l'espace 45 entre les deux ébauches 4', 11' de manière à recouvrir leurs reliefs 9', 16' et à adhérer sur la surface 5' extérieure de la première ébauche 4' et la surface 12' intérieure de la deuxième ébauche 11'.

L'ébauche 1' de dispositif 1 présente des dimensions supérieures à celles du dispositif 1 final, de sorte que, de même que précédemment, l'ébauche 1' est usinée pour obtenir les dimensions finales souhaitées du dispositif 1, les pontets 47 étant alors éliminés.

Le fait que la première ébauche 4' et la deuxième ébauche 11' ne soient pas aux dimensions finales de la pièce 4 interne et de la pièce 11 externe permet d'injecter l'élastomère sous pression dans l'espace 45 entre les ébauches 4', 11' en évitant les risque de rupture des matériaux. Notamment, l'épaisseur de la pièce 11 externe, c'est-à-dire la dimension entre sa surface 12 intérieure et sa surface 15 extérieure, peut devoir être faible pour respecter le dimensionnement de la couche 18 d'élastomère et des reliefs 9, 16, tout en respectant un encombrement maximal. En formant la deuxième ébauche 11' plus épaisse, les risques de rupture au moment de l'injection sous pression sont réduits.

Par ailleurs, en injectant l'élastomère sous pression, il est possible de conserver cette pression au sein de la couche 18 d'élastomère. Cette dernière se retrouve alors comprimée entre la pièce 4 interne et la pièce 11 externe. En adaptant cette pression au sein de la couche 18 d'élastomère, il est possible d'obtenir un dispositif 1 dont la raideur est supérieure à celle des inserts connus. En effet, plus la pression est élevée, moins la couche 18 d'élastomère ne peut s'étirer, augmentant la raideur du dispositif 1.

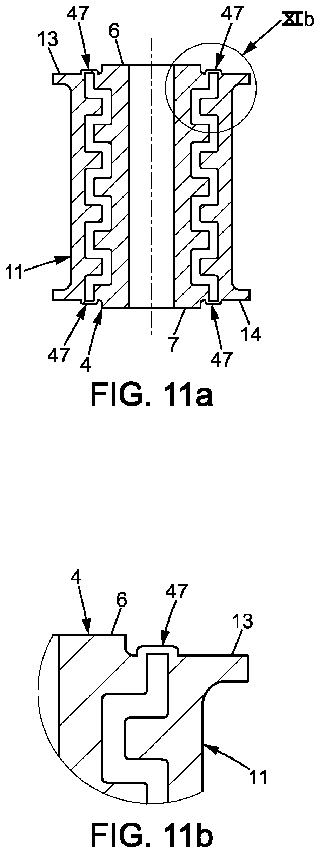

Toutefois, il est envisageable de fabriquer directement des ébauches 4', 11' aux dimensions finales de la pièce 4 interne et de la pièce 11 externe, reliées ensemble par des pontets 47 de matière comme précédemment, entre d'une part la surface 6 supérieure de la pièce 4 interne et la surface 13 supérieure de la pièce 11 externe et d'autre part entre la surface 7 inférieure de la pièce 4 interne et la surface 14 inférieure de la pièce 11 externe (figures 11a et 11b). Dans ce cas, une fois l'élastomère injecté et adhéré pour former la couche 18 d'élastomère, les pontets 47 sont brisés.

Le dispositif 1 peut ensuite être assemblé entre les deux éléments 2, 3 du satellite comme décrit précédemment. Le dispositif 1 se présente donc comme une unique pièce à manipuler pour l'assemblage des deux éléments 2, 3, rendant l'assemblage plus aisé. Le nombre de pièces à stocker est également diminué, rendant la gestion plus aisée et donc moins coûteuse.

Le dispositif 1 ainsi formé permet également une grande adaptabilité tout en conservant un encombrement donné en dimensionnant d'une part l'espace 45 entre les ébauches 4', 11' et d'autre part les reliefs 9, 16 selon les performances voulues.

## Revendications

1. Dispositif (**1**) de fixation amortissant entre deux éléments (**2**, **3**) à assembler, le dispositif de fixation comprenant :
- une pièce (**4**) interne tubulaire selon un axe (**A**) de fixation, destinée à être rigidement fixée à un élément (**3**) à assembler, et comprenant une surface (**5**) latérale extérieure ;
- une pièce (**11**) externe tubulaire selon l'axe (**A**) de fixation, creuse, destinée à être rigidement fixée à un autre élément (**2**) à assembler et comprenant une surface (**12**) latérale intérieure, la pièce (**4**) interne étant logée dans la pièce (**3**) externe de sorte que la surface extérieure de la pièce interne est en vis-à-vis de la surface intérieure de la pièce externe ;
- une couche (**18**) d'élastomère entre la pièce (**11**) externe et la pièce (**4**) interne,
le dispositif de fixation étant **caractérisé en ce que** la surface (**5**) latérale extérieure de la pièce (**4**) interne comprend au moins une portion irrégulière et la surface (**12**) latérale intérieure de la pièce (**11**) externe comprend au moins une portion irrégulière complémentaire de la portion irrégulière de la surface (**5**) externe de la pièce (**4**) interne, la couche (**18**) d'élastomère comprenant une première face (**19**) adhérée sur la portion irrégulière de la surface (**5**) extérieure latérale de la pièce (**4**) interne, et une deuxième face (**20**), opposée à la première face (**19**), adhérée sur la portion irrégulière de la surface (**12**) intérieure latérale de la pièce (**11**) externe, et **en ce que** la couche (**18**) d'élastomère, lorsque vue en coupe dans un plan (**P**) longitudinal comprenant l'axe (**A**) de fixation, comprend :
- de chaque côté de l'axe (**A**) de fixation, au moins trois portions (**28a**, **28b**, **38a**, **38b**, **29a**, **29b**) dites longitudinales, réparties dans la direction de l'axe (**A**) de fixation selon un pas prédéterminé, au moins une des trois portions (**28a**, **28b**, **38a**, **38b**, **29a**, **29b**) longitudinales travaillant à l'opposé des deux autres portions selon la direction de l'axe (**A**) longitudinal et
- au moins deux portions (**27a**, **27b**, **37a**, **37b**, **29a**, **29b**) dite transversales, travaillant dans une direction transverse à l'axe (**A**) de fixation, une première portion (**27a**, **29a**, **37a**) étant située d'un premier côté de l'axe (**A**) de fixation et la deuxième portion (**27b**, **29b**, **37b**) étant située de l'autre côté de l'axe (**A**) de fixation.

2. Dispositif (1) selon la revendication 1, dans lequel la portion irrégulière de la surface (5) externe de la pièce (4) interne et la portion irrégulière de la surface (12) interne de la pièce (11) externe comprennent des anneaux (30, 33) autour de la direction longitudinale.

3. Dispositif (1) selon la revendication 2, dans lequel les anneaux (30, 33) sont sensiblement perpendiculaires à la direction longitudinale et de forme rectangulaire.

4. Dispositif (1) selon l'une quelconque des revendications précédentes, dans lequel la portion irrégulière de la surface (5) externe de la pièce (4) interne comprend au moins un filet (21) autour de la direction longitudinale, et dans lequel la portion irrégulière de la surface (12) interne de la pièce (11) externe comprend au moins un filet (24) complémentaire du filet (21) de la pièce (4) interne, et la couche (18) d'élastomère recouvrant les filets (21, 24) au moins partiellement.

5. Dispositif (1) selon la revendication 4, dans lequel les filets (21, 24) sont rectangulaire.

6. Dispositif (1) selon la revendication 4, dans lequel les filets (21, 24) sont triangulaire.

7. Dispositif (1) selon l'une quelconque des revendications précédentes, dans lequel la pièce (4) interne et la pièce (11) externe sont des pièces métalliques.

8. Dispositif (1) selon l'une quelconque des revendications précédentes, dans lequel, lorsque le dispositif est au repos, l'épaisseur de la couche (18) d'élastomère, entre ses deux faces (19, 20), est constante.

9. Dispositif (1) selon l'une quelconque des revendications précédentes, dans lequel la couche (18) en élastomère est continue dans la direction longitudinale et autour de la direction longitudinale, de sorte que la couche (18) d'élastomère se présente sous la forme d'une unique pièce monobloc en élastomère.

10. Dispositif (1) selon l'une quelconque des revendications précédentes, dans lequel la pièce (4) interne comprend un perçage (8).

11. Procédé de fabrication du dispositif de fixation amortissant selon l'une quelconque des revendications précédentes, comprenant les étapes suivantes :
- fabrication d'une ébauche (**1**') de dispositif comprenant une ébauche (**4**') de pièce (**4**) interne sur laquelle une surface (**5**') extérieure est formée et une ébauche (**11**') de pièce (**11**) externe sur laquelle une surface (**12**') intérieure est formée, la surface (**11**') intérieure de l'ébauche (**11**') de pièce (**11**) externe étant en vis-à-vis de la surface (**5**') extérieure de l'ébauche (**4**') de pièce (**4**) interne ;
- insertion d'un élastomère entre la surface (**5**') extérieure de l'ébauche (**4**') de pièce (**4**) interne et la surface (**12**') intérieure de l'ébauche (**11**') de pièce (**11**) externe ;
- adhérisation de l'élastomère d'une part sur la surface (**5**') extérieure de l'ébauche (**4**') de pièce (**4**) interne et d'autre part sur la surface (**12**') intérieure de l'ébauche (**11**') de pièce (**11**) externe.

12. Procédé de fabrication selon la revendication 11, dans lequel l'étape d'insertion de l'élastomère est une étape d'injection.

13. Procédé de fabrication selon la revendication 11 ou la revendication 12, dans lequel la fabrication de l'ébauche (1') de dispositif (1) comprend les opérations suivantes :
- usinage de l'ébauche (**4**') de pièce (**4**) interne, la surface (**5**') externe formant un filetage,
- usinage de l'ébauche (**11**') de la pièce (**11**) externe, la surface (**12**') interne formant un taraudage complémentaire du filetage,
- vissage de l'ébauche (**4**') de pièce (**4**) interne dans l'ébauche (**11**') de pièce (**11**) externe pour obtenir l'ébauche (**1**') de dispositif (**1**).

14. Procédé de fabrication selon la revendication 13, dans lequel la fabrication de l'ébauche (1') de dispositif (1) comprend les opérations suivantes :
- impression tridimensionnelle simultanée de l'ébauche (**11**') de pièce (**11**) externe et de l'ébauche (**4**') de pièce (**4**) interne en position dans l'ébauche (**11**') de pièce (**11**) externe,
- fabrication d'au moins un pontet (**47**) entre l'ébauche (**11**') de pièce (**11**) externe et l'ébauche (**4**') de pièce (**4**) interne assurant le maintien de leur position relative.

15. Procédé de fabrication selon l'une quelconque des revendications 11 à 14, comprenant une étape finale d'usinage de l'ébauche (1') aux dimensions finales souhaitées du dispositif (1).

16. Ensemble comprenant au moins deux éléments assemblés au moyen d'au moins un dispositif (1) selon l'une quelconque des revendications 1 à 10, la pièce (11) externe étant fixée rigidement à un premier élément (2), la pièce (4) interne étant fixée rigidement sur le deuxième élément (3).

17. Ensemble selon la revendication 16, dans lequel la pièce (4) interne comprend un perçage (8), le deuxième élément (3) étant fixé rigidement à la pièce (4) interne par l'intermédiaire d'une vis traversant le perçage (8).

18. Ensemble selon la revendication 16 ou la revendication 17, dans lequel le premier élément (2) est une structure porteuse, tel que le corps d'un satellite et le deuxième élément (3) est un équipement du satellite.

19. Ensemble selon l'une quelconque des revendications 17 à 18, dans lequel le premier élément (2) est un anneau d'interface lanceur et le deuxième élément (3) est un anneau d'interface satellite.

20. Procédé d'assemblage d'un ensemble support selon l'une quelconque des revendications 16 à 19, comprenant une étape de fixation rigide de la pièce (11) externe du dispositif (1) de fixation sur le premier élément (2) et une étape de fixation rigide du deuxième élément (3) sur la pièce (4) interne du dispositif (1) de fixation.

## Patentansprüche

1. Befestigungsvorrichtung (1) zur Dämpfung zwischen zwei zusammenzusetzenden Elementen (2, 3), wobei die Befestigungsvorrichtung Folgendes umfasst:
ein rohrförmiges Innenteil (4), das sich entlang einer Befestigungsachse (A) erstreckt, starr auf einem zusammenzusetzenden Element (3) zu befestigen ist und eine Seitenaußenfläche (5) umfasst;
ein rohrförmiges, hohles Außenteil (11), das sich entlang der Befestigungsachse (A) erstreckt, starr auf einem anderen zusammenzusetzenden Element (2) zu befestigen ist und eine Seiteninnenfläche (12) aufweist, wobei das Innenteil (4) derart im Außenteil (3) angeordnet ist, dass die Außenfläche des Innenteils der Innenfläche des Außenteils zugewandt ist;
eine Elastomerschicht (18) zwischen dem Außenteil (11) und dem Innenteil (4),
wobei die Befestigungsvorrichtung **dadurch gekennzeichnet ist, dass** die Seitenaußenfläche (5) des Innenteils (4) mindestens einen unregelmäßigen Abschnitt umfasst und die Seiteninnenfläche (12) des Außenteils (11) mindestens einen unregelmäßigen Abschnitt umfasst, der komplementär zum unregelmäßigen Abschnitt der Außenfläche (5) des Innenteils (4) ist, wobei die Elastomerschicht (18) eine erste Seite (19), die auf dem unregelmäßigen Abschnitt der Seitenaußenfläche (5) des Innenteils (4) anhaftet, und eine zweite Seite (20), die zur ersten Seite (19) entgegengesetzt ist und auf dem unregelmäßigen Abschnitt der Seiteninnenfläche (12) des Außenteils (11) anhaftet, aufweist, und **dadurch gekennzeichnet, dass** die Elastomerschicht (18) in einer Längsebene (P), die die Befestigungsachse (A) umfasst, im Querschnitt betrachtet Folgendes umfasst:
auf jeder Seite der Befestigungsachse (A) mindestens drei Längsabschnitte (28a, 28b, 38a, 38b, 29a, 29b), die entlang der Befestigungsachse (A) in einem vordefinierten Abstand zueinander angeordnet sind, wobei mindestens einer der drei Längsabschnitte (28a, 28b, 38a, 38b, 29a, 29b) entlang der Längsachse (A) gegensätzlich zu den beiden anderen Abschnitten wirkt, und
mindestens zwei Querabschnitte (27a, 27b, 37a, 37b, 29a, 29b), die in eine Richtung quer zur Befestigungsachse (A) wirken, wobei ein erster Abschnitt (27a, 29a, 37a) auf einer ersten Seite der Befestigungsachse (A) angeordnet ist und der zweite Abschnitt (27b, 29b, 37b) auf der anderen Seite der Befestigungsachse (A) angeordnet ist.

2. Vorrichtung (1) nach Anspruch 1, wobei der unregelmäßige Abschnitt der Außenfläche (5) des Innenteils (4) und der unregelmäßige Abschnitt der Innenfläche (12) des Außenteils (11) Ringe (30, 33) um die Längsrichtung herum umfassen.

3. Vorrichtung (1) nach Anspruch 2, wobei die Ringe (30, 33) im Wesentlichen senkrecht zur Längsrichtung sind und eine rechteckige Form aufweisen.

4. Vorrichtung (1) nach einem der vorhergehenden Ansprüche, wobei der unregelmäßige Abschnitt der Außenfläche (5) des Innenteils (4) mindestens ein Gewinde (21) um die Längsrichtung herum umfasst und wobei der unregelmäßige Abschnitt der Innenfläche (12) des Außenteils (11) mindestens ein Gewinde (24) umfasst, das zum Gewinde (21) des Innenteils (4) komplementär ist, und wobei die Elastomerschicht (8) die Gewinde (21, 24) mindestens teilweise bedeckt.

5. Vorrichtung (1) nach Anspruch 4, wobei die Gewinde (21, 24) rechteckig sind.

6. Vorrichtung (1) nach Anspruch 4, wobei die Gewinde (21, 24) dreieckig sind.

7. Vorrichtung (1) nach einem der vorhergehenden Ansprüche, wobei das Innenteil (4) und das Außenteil (11) Metallteile sind.

8. Vorrichtung (1) nach einem der vorhergehenden Ansprüche, wobei, wenn sich die Vorrichtung im Ruhezustand befindet, die Dicke der Elastomerschicht (18) zwischen deren beiden Seiten (19, 20) konstant ist.

9. Vorrichtung (1) nach einem der vorhergehenden Ansprüche, wobei die Elastomerschicht (18) in der Längsrichtung und rund um die Längsrichtung durchgehend ist, so dass die Elastomerschicht (18) die Form eines einstückig ausgebildeten Elastomerteils aufweist.

10. Vorrichtung (1) nach einem der vorhergehenden Ansprüche, wobei das Innenteil (4) eine Bohrung (8) aufweist.

11. Verfahren zur Herstellung eines dämpfenden Befestigungselements nach einem der vorhergehenden Ansprüche, folgende Schritte umfassend:
Herstellung eines Rohlings (1') einer Vorrichtung, umfassend einen Rohling (4') eines Innenteils (4), auf dem eine Außenfläche (5') ausgebildet ist, und einen Rohling (11') eines Außenteils (11), auf dem eine Innenfläche (12') ausgebildet ist, wobei die Innenfläche (11') des Rohlings (11') des Außenteils (11) der Außenfläche (5') des Rohlings (4') des Innenteils (4) zugewandt ist;
Einbringen eines Elastomers zwischen die Außenfläche (5') des Rohlings (4') des Innenteils (4) und die Innenfläche (12') des Rohlings (11') des Außenteils (11);
Anhaften des Elastomers auf der Außenfläche (5') des Rohlings (4') des Innenteils (4) und auf der Innenfläche (12') des Rohlings (11') des Außenteils (11).

12. Herstellungsverfahren nach Anspruch 11, wobei der Schritt des Einbringens des Elastomers ein Einspritzschritt ist.

13. Herstellungsverfahren nach Anspruch 11 oder 12, wobei die Herstellung des Rohlings (1') der Vorrichtung (1) folgende Arbeitsvorgänge umfasst:
Bearbeitung des Rohlings (4') des Innenteils (4), wobei die Außenfläche (5') ein Gewinde ausbildet,
Bearbeitung des Rohlings (11') des Außenteils (11), wobei die Innenfläche (12') ein Außengewinde ausbildet, das zum Gewinde komplementär ist,
Verschrauben des Rohlings (4') des Innenteils (4) im Rohling (11') des Außenteils (11), um den Rohling (1') der Vorrichtung (1) zu erhalten.

14. Herstellungsverfahren nach Anspruch 13, wobei die Herstellung des Rohlings (1') der Vorrichtung (1) die folgenden Arbeitsschritte umfasst:
gleichzeitiges dreidimensionales Drucken des Rohlings (11') des Außenteils (11) und des Rohlings (4') des Innenteils (4) in seiner Position im Rohling (11') des Außenteils (11),
Herstellen von mindestens einem Steg (47) zwischen dem Rohling (11') des Außenteils (11) und dem Rohling (4') des Innenteils (4), um die Beibehaltung ihrer jeweiligen Position zu gewährleisten.

15. Herstellungsverfahren nach einem der Ansprüche 11 bis 14, umfassend einen abschließenden Schritt zur Bearbeitung des Rohlings (1') mit den gewünschten endgültigen Abmessungen der Vorrichtung (1).

16. Anordnung, mindestens zwei Elemente umfassend, die unter Verwendung von mindestens einer Vorrichtung (1) nach einem der Ansprüche 1 bis 10 zusammengesetzt sind, wobei
das Außenteil (11) starr auf einem ersten Element (2) befestigt ist und das Innenteil (4) starr auf dem zweiten Element (3) befestigt ist.

17. Anordnung nach Anspruch 16, wobei das Innenteil (4) eine Bohrung (8) umfasst, wobei das zweite Element (3) über eine durch die Bohrung (8) hindurchtretende Schraube starr auf dem Innenelement (4) befestigt ist.

18. Anordnung nach Anspruch 16 oder 17, wobei das erste Element (2) eine tragende Struktur, etwa ein Satellitenkörper, und das zweite Element (3) eine Einrichtung des Satelliten ist.

19. Anordnung nach Anspruch 17 oder 18, wobei das erste Element (2) ein Werfer-Grenzflächenring ist und das zweite Element (3) ein Satelliten-Grenzflächenring ist.

20. Verfahren zur Zusammensetzung einer Trageanordnung nach einem der Ansprüche 16 bis 19, umfassend einen Schritt des starren Befestigens des Außenteils (11) der Befestigungsvorrichtung (1) auf dem ersten Element (2) und einen Schritt des starren Befestigens des zweiten Elements (3) auf dem Innenteil (4) der Befestigungsvorrichtung (1).

## Claims

1. Device (**1**) for the shock-absorbing attachment of two elements (**2**, **3**) to be assembled, the attachment device comprising:
- an inner part (**4**) that is tubular along an axis of attachment (**A**) intended to be rigidly attached to an element (**3**) to be assembled, and comprising an outer lateral surface (**5**);
- an outer part (**11**) that is tubular along the axis of attachment (**A**), and is hollow, intended to be rigidly attached to another element (**2**) to be assembled and comprising an inner lateral surface (**12**), the inner part (**4**) being accommodated in the outer part (**3**) so that the outer surface of the inner part is facing the inner surface of the outer part;
- an elastomer layer (**18**) between the outer part (**11**) and the inner part (**4**),
the attachment device being **characterized in that** the outer lateral surface (**5**) of the inner part (**4**) comprises at least one irregular portion and the inner lateral surface (**12**) of the outer part (**11**) comprises at least one irregular portion complementary to the irregular portion of the outer surface (**5**) of the inner part (**4**), the elastomer layer (**18**) comprising a first face (**19**) bonded to the irregular portion of the lateral outer surface (**5**) of the inner part (**4**), and a second face (**20**) opposite to the first face (**19**), bonded to the irregular portion of the lateral inner surface (**12**) of the outer part (**11**), and **in that** the elastomer layer (**18**), when viewed in cross-section in a longitudinal plane (**P**) comprising the axis of attachment (**A**), comprises:
- on each side of the axis of attachment (**A**), at least three portions (**28a**, **28b**, **38a**, **38b**, **29a**, **29b**), called longitudinal, distributed in the direction of the axis of attachment (**A**) with a predetermined pitch, at least one of the three longitudinal portions (**28a**, **28b**, **38a**, **38b**, **29a**, **29b**) working against the other two portions in the direction of the longitudinal axis (**A**) and
- at least two portions (**27a**, **27b**, **37a**, **37b**, **29a**, **29b**), called transverse, working in a direction that is transverse to the axis of attachment (**A**), a first portion (**27a**, **29a**, **37a**) being situated on a first side of the axis of attachment (**A**) and the second portion (**27b**, **29b**, **37b**) being situated on the other side of the axis of attachment (**A**).

2. Device (1) according to claim 1, in which the irregular portion of the outer surface (5) of the inner part (4) and the irregular portion of the inner surface (12) of the outer part (11) comprise rings (30, 33) around the longitudinal direction.

3. Device (1) according to claim 2, in which the rings (30, 33) are substantially perpendicular to the longitudinal direction and rectangular in shape.

4. Device (1) according to any one of the preceding claims, in which the irregular portion of the outer surface (5) of the inner part (4) comprises at least one thread (21) around the longitudinal direction, and in which the irregular portion of the inner surface (12) of the outer part (11) comprises at least one thread (24) complementary to the thread (21) of the inner part (4), the elastomer layer (18) at least partially covering the threads (21, 24).

5. Device (1) according to claim 4, in which the threads (21, 24) are rectangular.

6. Device (1) according to claim 4, in which the threads (21, 24) are triangular.

7. Device (1) according to any one of the preceding claims, in which the inner part (4) and the outer part (11) are metal parts.

8. Device (1) according to any one of the preceding claims, in which, when the device is inactive, the thickness of the elastomer layer (18), between its two faces (19, 20), is constant.

9. Device (1) according to any one of the preceding claims, in which the elastomer layer (18) is continuous in the longitudinal direction and around the longitudinal direction, so that the elastomer layer (18) has the form of a single one-piece part made from elastomer.

10. Device (1) according to any one of the preceding claims, in which the inner part (4) comprises a hole (8).

11. Method for producing a shock-absorbing attachment device according to any one of the preceding claims, comprising the following stages:
- producing a blank (**1**') of the device comprising a blank (**4**') of the inner part (**4**) on which an outer surface (**5**') is formed and a blank (**11**') of the outer part (**11**) on which an inner surface (**12**') is formed, the inner surface (**11**') of the blank of the outer part (**11**) facing the outer surface (**5**') of the blank (**4**') of the inner part (**4**);
- inserting an elastomer between the outer surface (**5**') of the blank (**4**') of the inner part (**4**) and the inner surface (**12**') of the blank (**11**') of the outer part (**11**);
- bonding the elastomer on the one hand, on the outer surface (**5**') of the blank (**4**') of the inner part (**4**) and on the other hand, on the inner surface (**12**') of the blank (**11**') of the outer part (**11**).

12. Method of production according to claim 11, in which the stage of inserting the elastomer is an injection stage.

13. Method of production according to claim 11 or claim 12, in which the production of the blank (**1**') of the device (**1**) comprises the following operations:
- machining the blank (**4**') of the inner part (**4**), the outer surface (**5**') forming a male thread,
- machining the blank (**11**') of the outer part (**11**) the inner surface (**12**') forming a female thread complementary to the male thread,
- screwing the blank (**4**') of the inner part (**4**) into the blank (**11**') of the outer part (**11**) in order to obtain the blank (**1**') of the device (**1**).

14. Method of production according to claim 13, in which the production of the blank (1') of the device (1) comprises the following operations:
- simultaneous three-dimensional printing of the blank (**11**') of the outer part (**11**) and the blank (**4**') of the inner part (**4**) in position in the blank (**11**') of the outer part (**11**),
- producing at least one bridge (**47**) between the blank (**11**') of the outer part (**11**) and the blank (**4**') of the inner part (**4**) ensuring their relative position is held.

15. Method of production according to any one of claims 11 to 14, comprising a final stage of machining the blank (1') to the desired final dimensions of the device (1).

16. Set comprising at least two elements assembled by means of at least one device (1) according to any one of claims 1 to 10, the outer part (11) being rigidly attached to a first element (2), the inner part (4) being rigidly attached to the second element (3).

17. Set according to claim 16, in which the inner part (4) comprises a hole (8), the second element (3) being rigidly attached to the inner part (4) via a screw passing through the hole (8).

18. Set according to claim 16 or claim 17, in which the first element (2) is a load-bearing structure, such as the body of a satellite and the second element (3) is an item of equipment of the satellite.

19. Set according to any one of claims 17 to 18, in which the first element (2) is a launcher interface ring and the second element (3) is a satellite interface ring.

20. Method of assembling a support set according to any one of claims 16 to 19, comprising a stage of rigidly attaching the outer part (11) of the attachment device (1) to the first element (2) and a stage of rigidly attaching the second element (3) to the inner part (4) of the attachment device (1).
